# EUROPEAN PATENT SPECIFICATION

(11) **EP 2 913 598 B1**
(45) Date of publication and mention of the grant of the patent: **01.01.2020**
(21) Application number: 14192151.0
(22) Date of filing: 06.11.2014
(51) Int. Cl.: F24F 3/06, F24F 11/00, G05B 15/02, F24F 11/30, F24F 110/00, F24F 140/60

(54) **Air conditioner and operation method thereof**
Klimaanlage und Betriebsverfahren dafür
Climatiseur et son procédé de fonctionnement

(30) Priority: 07.11.2013 KR 20130134747
(43) Date of publication of application: 02.09.2015
(73) Proprietor: LG Electronics Inc., Yeongdeungpo-gu Seoul 150-721 (KR)
(72) Inventor: Park, Cheonsu, 642-711 Gyeongsangnam-do (KR)
(74) Representative: Vossius & Partner Patentanwälte Rechtsanwälte mbB

(56) References cited:
- EP-A1- 2 249 093
- EP-A1- 2 343 485
- EP-A2- 1 698 833
- CN-A- 102 721 143
- KR-A- 20130 038 559

## Description

### CROSS-REFERENCE TO RELATED APPLICATION

This application claims the priority benefit of Korean Patent Application No. 10-2013-0134747, filed on November 7, 2013 in the Korean Intellectual Property Office.

### BACKGROUND OF THE INVENTION

### 1. Field of the invention

The present invention relates to an air conditioner and an operation method thereof and, more particularly, to an air conditioner that stores data through communication between a plurality of air conditioner units and an operation method thereof.

### 2. Description of the Related Art

An air conditioner is an apparatus that discharges cool air or hot air into a room to adjust room temperature and to purify air in the room, thereby providing a more comfortable room environment for people. In general, the air conditioner includes an indoor unit, which includes a heat exchange, installed in a room and an outdoor unit, which includes a compressor and a heat exchange, to supply refrigerant to the indoor unit.

The air conditioner is controlled in a state in which the indoor unit including the heat exchanger and the outdoor unit including the compressor and the heat exchanger are separated from each other. The air conditioner is operated by controlling power supplied to the compressor or the heat exchanger. In addition, the air conditioner may include one outdoor unit and at least one indoor unit connected to the outdoor unit. The outdoor unit supplies refrigerant to the indoor unit according an operation state requested by a user such that the air conditioner is operated in a cooling mode or in a heating mode.

The air conditioner performs a cooling operation or a heating operation according to the flow of refrigerant. The cooling operation of the air conditioner is performed as follows. A high-temperature, high-pressure liquid refrigerant is supplied to the indoor unit from the compressor of the outdoor unit via the heat exchanger of the outdoor unit. The refrigerant is expanded by the heat exchanger of the outdoor unit with the result that the refrigerant is evaporated and, therefore, the temperature of surrounding air is lowered. As an indoor unit fan is rotated, cool air is discharged into the room. On the other hand, the heating operation of the air conditioner is performed as follows. A high-temperature, high-pressure gaseous refrigerant is supplied to the indoor unit from the compressor of the outdoor unit. The high-temperature, high-pressure gaseous refrigerant is liquefied by the heat exchanger of the indoor unit with the result that air is heated. As the indoor unit fan is rotated, the heated air is discharged into the room.

The air conditioner is configured to have a structure in which data are transmitted and received between air conditioner units. In general, the air conditioner is configured such that the air conditioner units transmit data to each other based on a predetermined cycle and receive response signals corresponding to the transmitted data from each other.

In general, the air conditioner is configured such that a remote controller of the air conditioner receives, stores, and displays data. In a case in which the air conditioner does not includes such a remote controller, however, it is necessary to provide a method of effectively storing data.

EP 2 249 093 A1 relates to an air conditioner managing apparatus that includes a storage unit, which accumulates operation data about numerous indoor units; a first screen generating unit, which generates a first screen wherein a plurality of indoor units-among target indoor units-with a problem can be visually verified based on the operation data; a second screen generating unit that generates a second screen wherein the operation data related to one specific indoor unit can be visually verified; and a display switching unit that-when one indoor unit of the plurality of indoor units with the problem displayed in the first screen is selected and an input of a prescribed button is accepted-switches to the display of the second screen related to that selected in-door unit.

### SUMMARY OF THE INVENTION

It is an object of the present invention to provide an air conditioner configured to have a structure in which data are transmitted and received between a plurality of air conditioner units such that the air conditioner units can store data and the stored data are transmitted to utilize statistical data based on previous operation of the air conditioner and an operation method thereof.

In accordance with an aspect of the present invention according to claim 1, the above and other objects can be accomplished by the provision of an air conditioner including a plurality of outdoor units and a plurality of indoor units connected to the respective outdoor units, wherein the outdoor units set any one of the outdoor units as a storage unit, calculate power consumption quantities of the outdoor units at predetermined time intervals, and transmit the calculate power consumption quantities of the outdoor units to the storage unit, and the storage unit accumulatively stores the power consumption quantity data received from the outdoor units.

The air conditioner may further include a controller further connected to the outdoor units, wherein, in a case in which the controller is further connected to the outdoor units, the storage unit may transmit the power consumption quantity data of the outdoor units stored in the storage unit to the controller.

In accordance with another aspect of the present invention, there is provided an operation method of an air conditioner including setting a first outdoor unit selected from among a plurality of outdoor units as a storage unit, calculating power consumption quantities of the respective outdoor units, transmitting the calculated power consumption quantity data of the respective outdoor units to the first outdoor unit set as the storage unit, and accumulatively storing the received power consumption quantity data of the respective outdoor units in the first outdoor unit.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view showing the construction of an air conditioner according the present invention;
FIG. 2 is a view showing another example of the construction of the air conditioner according the present invention;
FIG. 3 is a block diagram showing the construction of an air conditioner unit according the present invention;
FIG. 4 is a view showing the flow of data between air conditioner units based on a first outdoor unit of the air conditioner according the present invention;
FIG. 5 is a view showing the flow of data between air conditioner units of the air conditioner according the present invention;
FIG. 6 is a block diagram showing the construction of a remote controller of the air conditioner according the present invention;
FIG. 7 is a view showing the flow of data between the air conditioner units and the remote controller of the air conditioner according the present invention;
FIG. 8 is a flowchart showing an operation method of the air conditioner according the present invention based on data communication;
FIG. 9 is a view showing the construction of an air conditioner system according the present invention;
FIG. 10 is a graph showing statistical data of an air conditioner unit according the present invention.

### DETAILED DESCRIPTION OF THE PREFERRED EMBODIMENTS

Advantages and features of the present invention and a method of achieving the same will be more clearly understood from embodiments described below with reference to the accompanying drawings. However, the present invention is not limited to the following embodiments but may be implemented in various different forms. The embodiments are provided merely to complete disclosure of the present invention and to fully provide a person having ordinary skill in the art to which the present invention pertains with the category of the invention. The invention is defined only by the category of the claims. Wherever possible, the same reference numbers will be used throughout the specification to refer to the same or like elements

Hereinafter, reference will now be made in detail to embodiments, examples of which are illustrated in the accompanying drawings.

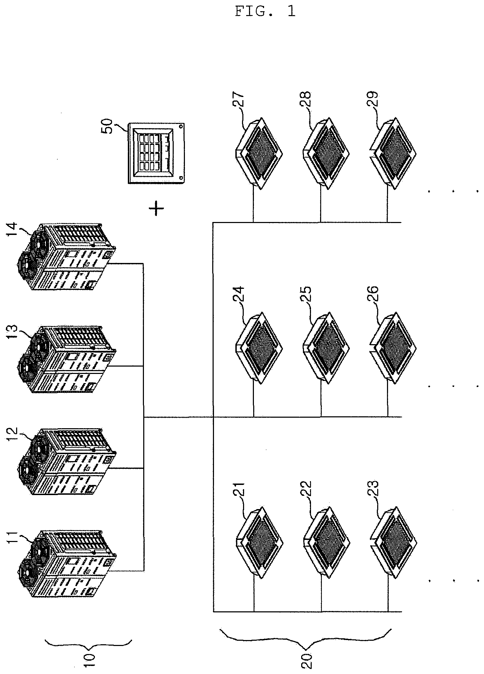

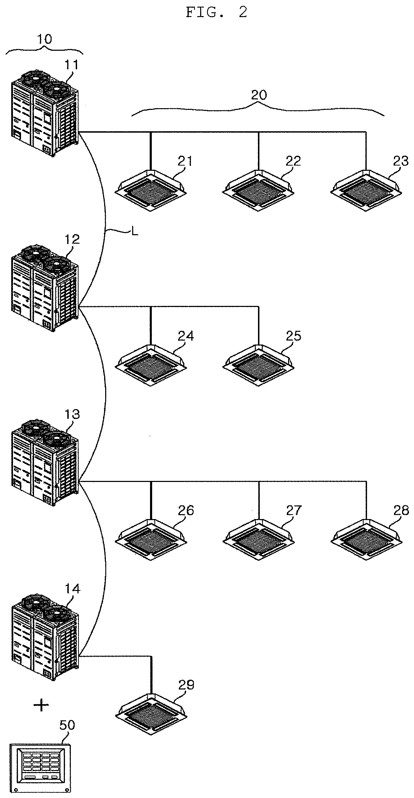

FIG. 1 is a view showing the construction of an air conditioner according the present invention and FIG. 2 is a view showing another example of the construction of the air conditioner according the present invention.

Referring to FIGS. 1 and 2, the air conditioner includes a plurality of indoor units 20 (21 to 29) and a plurality of outdoor units 10 (11 to 14).

In addition, the air conditioner further includes a remote controller 50 connected to the indoor units 20 to allow a user to input a control command, to receive data from the outdoor units 10 and the indoor units 20, and to monitor and control operations of the outdoor units 10 and the indoor units 20.

Furthermore, the air conditioner may further include a ventilation unit, an air purification unit, a humidification unit, a dehumidification unit, and a heater, descriptions of which will be omitted, in addition to the outdoor units 10 and the indoor units 20.

Each of the indoor units20 includes an expansion valve (not shown) to expand refrigerant supplied from at least a corresponding one of the outdoor units 10 connected to each of the indoor units 20, an indoor unit heat exchanger (not shown) to perform heat exchange between the refrigerant and air, an indoor unit fan (not shown) to introduce indoor air into the indoor unit heat exchanger and to discharge the heat-exchanged air into a room, a plurality of sensors (not shown), and a control means (not shown) to control operation of each of the indoor units 20.In addition, each of the indoor units 20 further includes a discharge port (not shown) to discharge the heat-exchanged air and an air direction adjustment means (not shown) to open and close the discharged air and to adjust the direction of the discharged air. Each of the indoor units 20 controls the rotational speed of the indoor unit fan to control suctioned air and discharged air, thereby adjusting air volume. In addition, each of the indoor units 20 may further include a human sensing means to sense a human body present in an indoor space according to circumstances. Furthermore, each of the indoor units 20 may further include an output unit to display an operation state and setting information of each of the indoor units 20 and an input unit to input setting data.

Each of the outdoor units 10 is operated in a cooling mode or in a heating mode to supply refrigerant to at least a corresponding one of the indoor units 20 in response to a request of at least a corresponding one of the indoor units 20 connected to each of the outdoor units 10 or a control command of the remote controller.

Each of the outdoor units 10 includes at least one compressor (not shown) to compress refrigerant introduced into the compressor and to discharge a high-pressure gas refrigerant, an accumulator (not shown) to separate the refrigerant into a gas refrigerant and a liquid refrigerant to prevent the liquid refrigerant, i.e. the refrigerant which has not been evaporated, from being introduced into the compressor, an oil separator (not shown) to collect oil from the refrigerant discharged from the compressor, an outdoor unit heat exchanger (not shown) to condense or evaporate the refrigerant through heat exchange between the refrigerant and outdoor air, an outdoor unit fan (not shown) to introduce air into the outdoor unit heat exchanger and to discharge the heat-exchanged air out of each of the outdoor units 10 such that heat exchange performed by the outdoor unit heat exchanger is more smoothly achieved, a four-way valve (not shown) to change a flow channel of the refrigerant according to an operation mode of each of the outdoor units 10, at least one pressure sensor (not shown) to measure pressure, at least one temperature sensor (not shown) to measure temperature, and a controller to control operation of each of the outdoor units 10 and to communicate with other air conditioner units. In addition, each of the outdoor units 10 may further include a plurality of sensors, a valve, and an overcooling device, detailed descriptions of which will be omitted.

As shown in FIG. 1, the air conditioner is configured to have a structure in which the outdoor units 10, i.e. first to fourth outdoor units 11 to 14, are connected to each other to supply refrigerant to the indoor units 20, i.e. first to ninth indoor units 21 to 29. In this case, the air conditioner may further include a distributer (not shown) to distribute the refrigerant supplied from the outdoor units 10 to corresponding ones of the indoor units 20.

In addition, as shown in FIG. 2, each of the outdoor units 10 may supply refrigerant to corresponding ones of the indoor units 20 connected to each of the outdoor units 10 and the outdoor units 10 may be connected to each other via a communication line L. Specifically, the first outdoor unit 11 may be connected to the first to third indoor units 21 to 23, the second outdoor unit 12 may be connected to the fourth and fifth indoor units 24 and 25, the third outdoor unit 13 may be connected to the sixth to eighth indoor units 26 to 28, and the fourth outdoor unit 14 may be connected to the ninth indoor unit 29.

The remote controller 50 may be connected to the outdoor units 10 and the indoor units 20 connected to each other as described above.

The remote controller 50 is connected to the outdoor units 10 and the indoor units 20 to monitor an operation state of each of the air conditioner units based on data received from the outdoor units 10 and the indoor units 20 and to control the air conditioner units or a specific one of the air conditioner units to be operated according to a control command input to the remote controller 50.

A plurality of remote controllers 50 may be provided. The remote controllers 50 may be connected to each other over a network.

The remote controller 50 stores information received from the air conditioner units. Specifically, the remote controller 50 stores information regarding the indoor units connected to the respective outdoor units and information regarding places at which the outdoor units 10 and the indoor units 20 are installed. In addition, the remote controller 50 forms an air conditioner network to assign addresses to the respective air conditioner units and to control operations of the respective air conditioner units based on the assigned addresses.

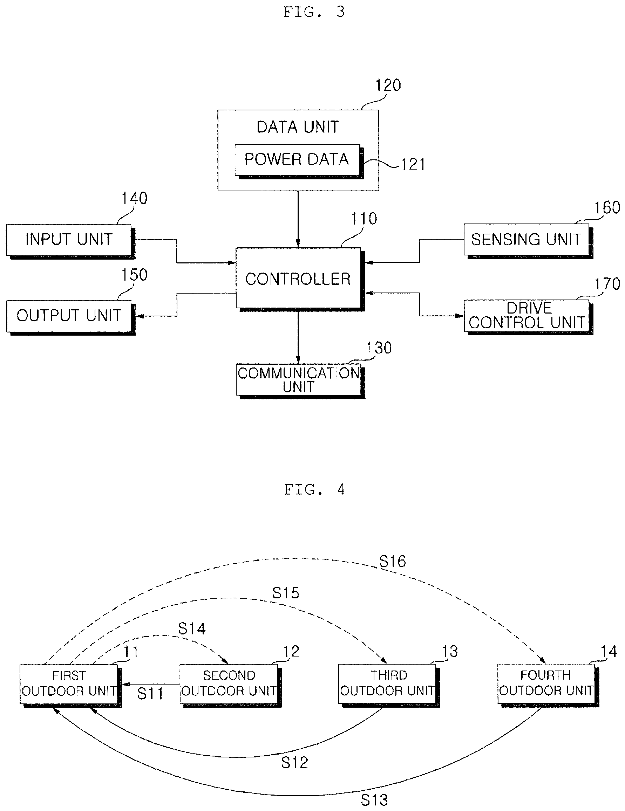

FIG. 3 is a block diagram showing the construction of an outdoor unit as an air conditioner unit according the present invention. Referring to FIG. 3, the outdoor unit 100 includes a drive control unit 170, a sensing unit 160, an input unit 140, an output unit 150, a data unit 120, a communication unit 130, and a controller to control overall operation of the outdoor unit 100. The data unit 120 stores power data 121.

The communication unit 130 includes a plurality of communication modules. The communication unit 130 transmits and receives data between the air conditioner units in a wired or wireless communication fashion. The outdoor unit is connected to at least one indoor unit via a communication line to communicates with the at least one indoor unit. Consequently, the outdoor unit and the at least one indoor unit may form an air conditioner network based on transmission and reception of data through the communication unit 130. In this case, the communication unit 130may transmit and receive data between the air conditioner units through RS485 transmission. In a case in which the remote controller is connected to the outdoor unit, the remote controller may perform communication in a communication mode different from the communication mode between the outdoor unit and the at least one indoor unit.

The drive control unit 170 controls operation of the air conditioner unit according to a control command of the controller 110. The drive control unit 170 may control operations of the compressor, the valve, and the outdoor unit fan. In this case, the drive control unit 170 may include a compressor drive control unit, a valve drive control unit, and a fan drive control unit.

The sensing unit 160 includes a plurality of sensors to measure data, such as temperature, pressure, rotational speed, voltage, and current. The sensing unit 160 measures information regarding the outdoor unit through the sensors at the interior and the exterior of the outdoor unit and inputs the measured information to the controller 110.

The input unit 140 includes at least one predetermined input means, such as a button or a switch. The input unit 140 inputs a predetermined signal to the controller 110 according to manipulation of the input means. The input unit 140 may includes an input means to perform power, addressing setting, master setting, and text operation.

The output unit 150 may include a buzzer or a speaker to output a predetermined effect sound or a predetermined warning sound and a lamp lit or blinked to output an operation state of the outdoor unit, a connection between the outdoor unit and the other air conditioner units, or warning related to the outdoor unit. In addition, the output unit 150 may include a predetermined display means to output numerals, letters, special characters, or images. According to circumstances, the display means may not provided.

The data unit 120 stores basic data regarding each air conditioner unit, control data necessary to control operation of each air conditioner unit, input and output data, and data transmitted and received through the communication unit 130. In particular, the data unit 120 stores power data 121.

The power data 121 include not only data regarding power consumption of the outdoor unit but also data of other outdoor units received through the communication unit 130.

The controller 110 processes input and output data and controls transmission and reception of data between the air conditioner units through the communication unit 130. The controller 110 stores control setting received from the remote controller 50 or a terminal (not shown) or control setting received from at least one of the indoor units 20 and controls the outdoor unit to perform a predetermined operation based on the received control setting or input setting.

The controller 110 may apply a control command to the drive control unit 170 such that the outdoor unit performs a predetermined operation based on data input from the sensing unit 160, check an operation state of the outdoor unit, determine whether the operation of the outdoor unit is normal or abnormal, and output warning upon determining that the operation of the outdoor unit is abnormal.

The controller 110 transmits and receives data to and from other air conditioner units through the communication unit 130 based on a predetermined cycle and stores data regarding control and operation state of the other air conditioner units. In addition, the controller 110 receives power consumption quantity data of other air conditioner units, i.e. other outdoor units and indoor units connected to the other outdoor units, through the communication unit 130 and stores the received power consumption quantity data in the data unit 120 as the power data 121.

The controller 110 calculates power consumption quantity of the outdoor unit according to the product of input voltage, input current, and power factor based on the operation time of the outdoor unit and the operation state of the compressor. In addition, the controller 110 may receive data regarding power consumption quantity from the at least one indoor unit connected to the outdoor unit. At this time, the at least one indoor unit 20 may calculate power consumption quantity using input voltage, input current, and power factor and transmit the result of calculation to the outdoor unit. Alternatively, the at least one indoor unit 20 may transmit information regarding input voltage, input current, and power factor to the outdoor unit, which may calculate the power consumption quantity.

At this time, the controller 110 stores power consumption quantity data of other air conditioner units, i.e. other outdoor units and indoor units connected to the other outdoor units, based on the storage capacity of the data unit 120. In a case in which the quantity of the data stored in the data unit 120 exceeds a predetermined size, the controller 110 may transmit a notification signal to at least one outdoor unit such that the at least one outdoor unit stores the power consumption quantity data.

When an outdoor unit to store the power consumption quantity data is set after transmission of the notification signal, the controller 110 transmits data regarding the calculated power consumption quantity to the outdoor unit selected to store the power consumption quantity data.

In addition, in a case in which the remote controller 50 is connected, the controller 110 transmits the stored power data 121 to the remote controller 50 according to a request of the remote controller 50. After the remote controller 50 is connected, the controller 110 transmits data regarding power consumption quantity to the remote controller 50 without storage of data in another outdoor unit.

FIG. 4 is a view showing the flow of data between the air conditioner units based on the first outdoor unit of the air conditioner according the present invention. As shown in FIG. 4, the outdoor units store data through communication between the respective outdoor units. In the following description, it is assumed that the first outdoor unit 11 is set as a basic unit to store power consumption quantity data.

The first to fourth outdoor units 11 to 14 are connected to each other via a communication line to transmit and receive data to and from each other. At this time, the structure in which the first to fourth outdoor units 11 to 14 are connected to each other may be based on FIG. 1 or 2. However, the present invention is not limited thereto. The first to fourth outdoor units 11 to 14 are connected to each other based on a structure other than the structure shown in FIGs. 1 and 2.

The first outdoor unit 11 periodically requests power consumption quantity data from the second to fourth outdoor units 12 to 14. At this time, the first outdoor unit 11 may broadcast a request signal to the second to fourth outdoor units 12 to 14. Alternatively, the first outdoor unit 11 may transmit a request signal to the second to fourth outdoor units 12 to 14 based on addresses of the respective outdoor units.

The second to fourth outdoor units 12 to 14 calculate power consumption quantities according to the request signal of the first outdoor unit 11 and transmit the calculated power consumption quantity data to the first outdoor unit 11. At this time, the second to fourth outdoor units 12 to 14 may also transmit power consumption quantity information of the indoor units connected to the second to fourth outdoor units 12 to 14 to the first outdoor unit 11.

The second to fourth outdoor units 12 to 14 may transmit the power consumption quantity data to the first outdoor unit 11 in order of receiving the request signal based on a connection state of the communication line. Alternatively, the second to fourth outdoor units 12 to 14 may transmit the power consumption quantity data to the first outdoor unit 11 in such a manner that one outdoor unit waits for a predetermined time and then transmits the data to the first outdoor unit 11 while another outdoor unit transmits the data to the first outdoor unit 11.

At this time, the first outdoor unit 11 stores the received data in the data unit 120 as the power data 121. The first outdoor unit 11 periodically checks the quantity of the stored data. In a case in which the quantity of the data stored in the data unit 120 exceeds a predetermined size, the first outdoor unit 11 transmits a notification signal related to the quantity of the stored data to the second to fourth outdoor units 12 to 14.

Any one of the outdoor units is set as a power consumption quantity data storage unit based on the notification signal of the first outdoor unit 11. At this time, the power consumption quantity data storage unit may be sequentially set in order of connection or randomly set. However, any air conditioner unit, if having already stored the data, is excluded at the next procedure of setting the power consumption quantity data storage unit.

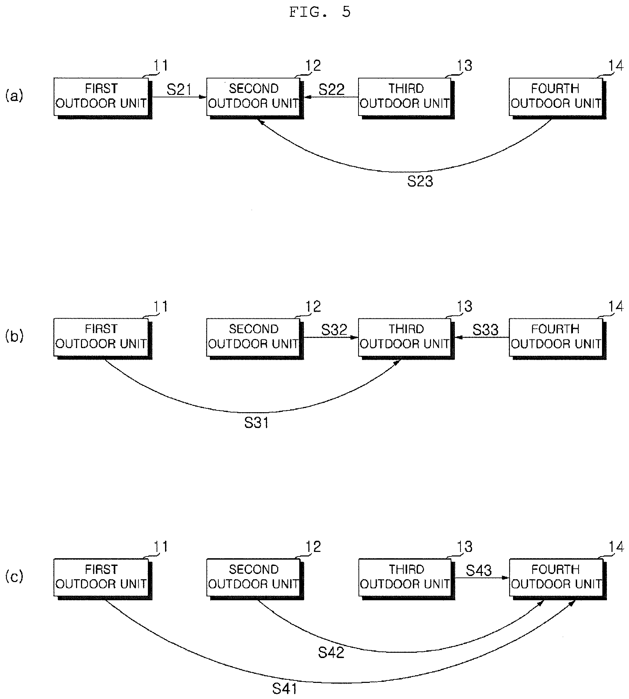

FIG. 5 is a view showing the flow of data between the air conditioner units of the air conditioner according the present invention.

In a case in which the power consumption quantity data are stored in the first outdoor unit 11 and the quantity of the stored data exceeds a predetermined size as previously described, the second outdoor unit 12 is set as a power consumption quantity data storage unit since the first outdoor unit 11 cannot store data any more.

As a result, as shown in FIG. 5(a), the first, third, and fourth outdoor units 11, 13, and 14 transmit power consumption quantity data to the second outdoor unit 12. The second outdoor unit 12 stores the received power consumption quantity data.

In a case in which the second outdoor unit 12 stores a predetermined size of data, on the other hand, the power consumption quantity data storage unit is reset. As shown in FIG. 5(b), the third outdoor unit 13 is set as the power consumption quantity data storage unit. As a result, the first, second, and fourth outdoor units 11, 12, and 14 transmit power consumption quantity data to the third outdoor unit 13. The third outdoor unit 13 stores the received power consumption quantity data. Of course, the third outdoor unit 13 stores power consumption quantity data of the third outdoor unit 13, which is calculated by the third outdoor unit 13.

In a case in which the fourth outdoor unit 14 is set as the power consumption quantity data storage unit as shown in FIG. 5(c), the first to third outdoor units 11 to 13 transmit power consumption quantity data calculated by the first to third outdoor units 11 to 13 to the fourth outdoor unit 14. The fourth outdoor unit 14 stores the received power consumption quantity data.

The power consumption quantity data storage unit may be sequentially set as described above. According to circumstances, the power consumption quantity data storage unit may be randomly set. However, any air conditioner unit, if having already stored the data, is excluded at the next procedure of setting the power consumption quantity data storage unit.

In a case in which all of the first to fourth outdoor units 11 to 14 cannot store data any more, the data are deleted in order of data storage and then new data are stored. For example, the data stored in the first outdoor unit 11 are the first stored data. Consequently, the data stored in the first outdoor unit 11 are deleted and then new data are stored in the first outdoor unit 11.

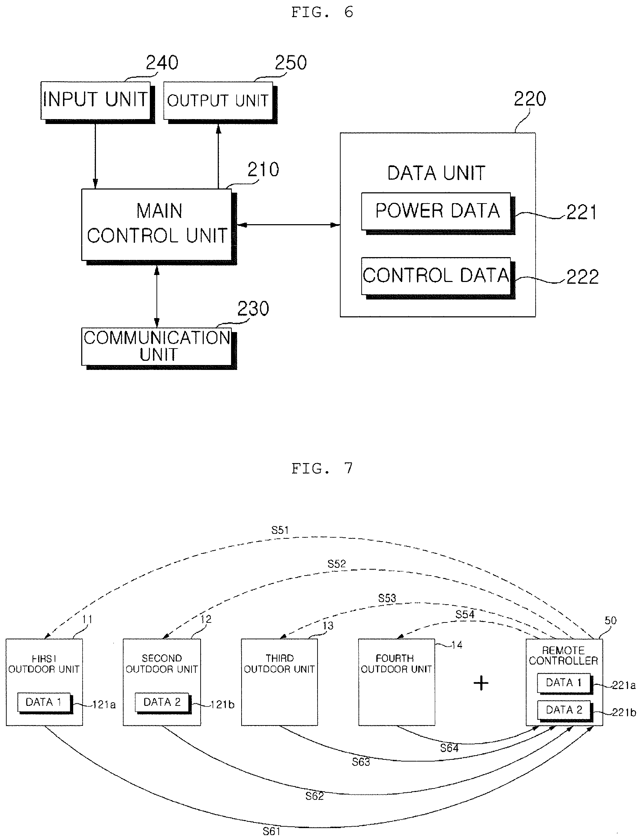

FIG. 6 is a block diagram showing the construction of the remote controller of the air conditioner according the present invention. The remote controller 50 is connected to the outdoor units and the indoor units shown in FIG. 1 or 2.

Referring to FIG. 6, the remote controller 50 includes an input unit 240, an output unit 250, a communication unit 230, a data unit 220, and a main control unit 210 to control overall operations of the outdoor units and the indoor units.

The communication unit 230 of the remote controller 50 is connected to the outdoor units 10 and the indoor units 20 in a wired or wireless communication fashion to transmit and receive data to and from the outdoor units 10 and the indoor units 20. The communication unit 230 may be connected to the outdoor units over the Internet or the air conditioner network. The communication unit 230 may perform communication in a wireless communication mode as well as a wired communication mode. The communication unit 230 may include a plurality of communication modules based on the communication mode.

The input unit 240 includes at least one predetermined input means. The input unit 240 inputs a predetermined signal to the controller 110 according to manipulation of the input means.

The input unit 240 may be constituted by a button, a dome switch, a touch pad (static pressure or electrostatic), a jog wheel, a jog switch, a finger mouse, a rotary switch, or a jog dial. The input unit 240 is not particularly restricted so long as the input unit 240 creates predetermined input data according to manipulation, such as push, rotation, pressure, or contact.

The output unit 250 displays various kinds of information regarding operation states and operation settings of the air conditioner units received from the outdoor units 10 through the communication unit 230. In this case, the output unit 250 may display various kinds of information received through a graphical user interface. The respective air conditioner units may be displayed as icons or images.

The output unit 250 may display a control menu and data in response to a control command of the main control unit 210. In addition, the output unit 250 may display information corresponding to an item selected from the menu. In particular, the output unit 250 may display power consumption quantity data of the outdoor units or the indoor units received from the outdoor units 10 through the communication unit 230 on a screen. In a case in which power consumption quantity exceeds a predetermined level according to settings, the output unit 250 may output warning.

The output unit 250 may be constituted by a display device, such as a liquid crystal display (LCD) or a light emitting diode (LED) display. According to circumstances, the output unit 250 may be constituted by a touch screen. However, the present invention is not limited thereto.

The output unit 250 may include a speaker to output a predetermined sound and a lamp lit or blinked to output operation states of the air conditioner units, connection states between the air conditioner units, or warning as output means.

The data unit 220 stores operation of the remote controller 50, data necessary to configure the screen, and control data 222 necessary to control operation of the air conditioner units. The data unit 220 stores not only operation state data (not shown) of the air conditioner units received through the communication unit 230 but also power data 221 received from the outdoor units 10.

In this case, the data unit 220 may include a nonvolatile memory, such as one or more magnetic disc storage devices, one or more flash memory devices, or other nonvolatile solid memory devices. However, the present invention is not limited thereto. The data unit 220 may include readable storage media.

The main control unit 210 processes data input and output through the input unit 240 and the output unit 250, transmits and receives data to the outdoor units and the indoor units through the communication unit 230, generates a control command to control the air conditioner units, i.e. the outdoor units and the indoor units, to perform predetermined operations according to input settings, and transmits the control command to the outdoor units and the indoor units through the communication unit 230.

The remote controller 50 includes a control program to analyze data received from the indoor units and the outdoor units and to output the result of analysis to the output unit 250. The remote controller 50 outputs a monitoring screen or a control screen to the output unit through the control program.

The main control unit 210 outputs a monitoring screen of the air conditioner units which are being currently operated based on the received operation state data of the outdoor units and the indoor units. In addition, the main control unit 210 stores the power consumption quantity data received from the outdoor units in the data unit 220, analyzes the stored power consumption quantity data, and displays data based on power consumption on the screen.

In a case in which the main control unit 210 is connected to a plurality of outdoor units through the communication unit 230, the main control unit 210 transmits a signal indicating that the main control unit 210 is connected to the outdoor units to the outdoor units. In a case in which the main control unit 210 is connected to one outdoor unit according to a connection state, on the other hand, the main control unit 210 may perform transmission to a plurality of outdoor units through the connected outdoor unit.

The main control unit 210 requests the power consumption quantity data stored in the outdoor units from the outdoor units as well as the operation state data of the outdoor units and the indoor units. Upon receiving the power consumption quantity data from the outdoor units in response to the request, the main control unit 210 stores the power consumption quantity data received through the communication unit 230 in the data unit 220 as the power data 221, analyzes the stored power consumption quantity data, and displays the result of analysis on the screen.

FIG. 7 is a view showing the flow of data between the air conditioner units and the remote controller of the air conditioner according the present invention. In a case in which a plurality of outdoor units 10 is operated in a state in which the remote controller is not connected to the outdoor units 10 as shown in FIG. 7, power consumption quantities of the outdoor units 10 are calculated and the calculated power consumption quantity data of the respective outdoor units 10 are stored in the power consumption quantity data storage units.

For example, the power consumption quantity data are stored in the first outdoor unit 11 as data 1 121a and power consumption quantity data are stored in the second outdoor unit 12 as data 2 121b. The power consumption quantity data are accumulatively stored. As the size of the power consumption quantity data is increased, the power consumption quantity data may be sequentially stored in the third or fourth outdoor unit.

In a case which data 1 and data 2 are stored in the first outdoor unit 11 and the second outdoor unit 12, respectively, the remote controller 50 may be connected to a network constituted by the outdoor units and the indoor units.

The main control unit 210 of the remote controller 50 senses that the remote controller 50 is connected to the network according to an input signal of the communication unit 230 and requests data from the first to fourth outdoor units 11 to 14 (S51 to S54). At this time, the remote controller 50 may broadcast a data request signal to the first to fourth outdoor units 11 to 14. Alternatively, the remote controller 50 may transmit a data request signal to the first to fourth outdoor units 11 to 14 based on addresses of the respective outdoor units.

The first to fourth outdoor units 11 to 14 transmit operation state data of the first to fourth outdoor units 11 to 14 to the remote controller 50.

In addition, the first outdoor unit 11 and the second outdoor unit 12 transmit the pre-stored power consumption quantity data, i.e. data 1 121a and data 2 121b, to the remote controller 50 (S61 and S62).

At this time, since the power consumption quantity data are not stored in the other of the first to fourth outdoor units 11 to 14, i.e. the third and fourth outdoor unit 13 and 14, the third and fourth outdoor unit 13 and 14 may not transmit data to the remote controller 50 and, according to circumstances, the third and fourth outdoor unit 13 and 14 may transmit a response signal indicating that there are no data stored in the third and fourth outdoor unit 13 and 14 to the remote controller 50 (S63 and S64).

Data 1 121a and data 2 121b transmitted as described above are stored in the remote controller 50 as power data, i.e. data 1 221a and data 2 221b.

The remote controller 50 may analyze the received data 1 and data 2 to determine power consumption quantity of the air conditioner according to operation of the air conditioner before the remote controller 50 is connected to the outdoor units and the indoor units and display data regarding the determined power consumption quantity of the air conditioner. In addition, the remote controller 50 may transmit power data of the air conditioner to an external apparatus according to a request of the external apparatus.

At this time, in a case in which a controller is connected to the outdoor units and the indoor units in addition to the remote controller, the outdoor units transmit the power consumption quantity data stored in the outdoor units to the controller connected to the outdoor units.

The controller may be one selected from among a remote controller for central control, a general remote controller, a power indicator, a power controller, and a demand controller.

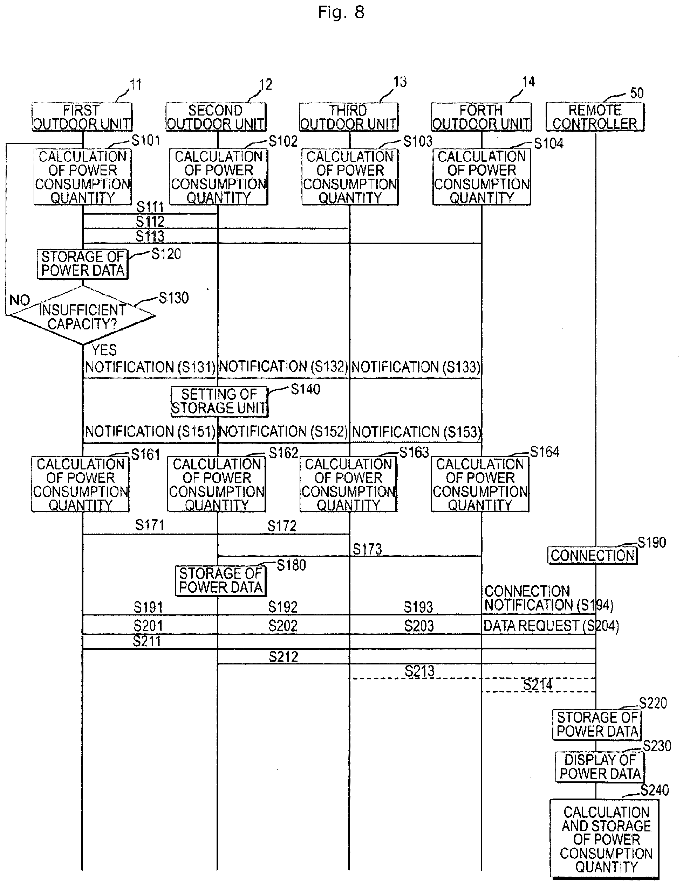

FIG. 8 is a flowchart showing an operation method of the air conditioner according the present invention based on data communication.

Referring to FIG. 8, in a state in which the first outdoor unit 11 is set as the power consumption quantity data storage unit, the first to fourth outdoor units 11 to 14 calculate power consumption quantities of the first to fourth outdoor units 11 to 14 (S101 to S104). At this time, the power consumption quantities are calculated by the product of input voltage, input current, and power factor. For the indoor units, the indoor units may calculate power consumption quantities of the indoor units and transmit the calculated power consumption quantities to the outdoor units. Alternatively, the indoor units may transmit information regarding the indoor units to the outdoor units and then the outdoor units may calculate power consumption quantities of the indoor units.

The second to fourth outdoor units 12 to 14 transmit the calculated power consumption quantities of the second to fourth outdoor units 12 to 14 to the first outdoor unit 11 as the power consumption quantity data storage unit (Sill to S113). At this time, the second to fourth outdoor units 12 to 14 may sequentially transmit the calculated power consumption quantities of the second to fourth outdoor units 12 to 14 to the first outdoor unit 11 according to a communication state. Alternatively, the second to fourth outdoor units 12 to 14 may randomly transmit the calculated power consumption quantities of the second to fourth outdoor units 12 to 14 to the first outdoor unit 11 based on a predetermined standby time.

The first outdoor unit 11 stores calculated power consumption quantities of the first outdoor unit 11 and the received power consumption quantities of the second to fourth outdoor units 12 to 14 in the data unit 120 (S120).

The first outdoor unit 11 periodically receives the power consumption quantities of the second to fourth outdoor units 12 to 14, repeatedly stores the received power consumption quantities of the second to fourth outdoor units 12 to 14, and checks the size of the accumulatively stored data. In a case in which the size of the stored data exceeds a predetermined size, i.e. data storage capacity of the first outdoor unit 11 is insufficient (S130), the first outdoor unit 11 transmits a notification signal indicating that the size of the stored data has exceeded the predetermined size to the second, third, and fourth outdoor units 12, 13, and 14 (S131, S132, and S133).

Since the first outdoor unit 11 cannot store data no more, the second outdoor unit 12 is set as the power consumption quantity data storage unit (S140).

The second outdoor unit 12 generates a notification signal indicating that the second outdoor unit 12 has been set as the power consumption quantity data storage unit and transmits the generated notification signal to the first, third, and fourth outdoor units 11, 13, and 14 (S151 to S153).

The first to fourth outdoor units 11 to 14 calculate power consumption quantities of the first to fourth outdoor units 11 to 14 (S161 to S164) . The first, third, and fourth outdoor units 11, 13, and 14 transmits the calculated power consumption quantities of the first, third, and fourth outdoor units 11, 13, and 14 to the second outdoor unit 12 (S171 to S173).

The second outdoor unit 12 stores the calculated power consumption quantity of the second outdoor unit 12 and the received power consumption quantities of the first, third, and fourth outdoor units 11, 13, and 14 in the data unit as power data (S180).

In a case in which each of the first to fourth outdoor units 11 to 14 is sequentially set as the power consumption quantity data storage unit, the power data are stored in the first to fourth outdoor units 11 to 14, and all of the first to fourth outdoor units 11 to 14 cannot store data any more, the data are deleted in order of data storage and then new data are stored.

In a case in which the remote controller 50 is connected to the first to fourth outdoor units 11 to 14 (S190), on the other hand, the remote controller 50 transmits a connection notification signal indicating that the remote controller 50 has been connected to the first to fourth outdoor units 11 to 14 to the first to fourth outdoor units 11 to 14 (S191 to S194) . At this time, the remote controller 50 may set addresses for central control to the respective air conditioner units.

The remote controller 50 requests data from the first to fourth outdoor units 11 to 14 (S201 to S204). The first to fourth outdoor units 11 to 14 transmits not only operation state data of the first to fourth outdoor units 11 to 14 but also the power data stored in the first to fourth outdoor units 11 to 14 to the remote controller 50 according to the request of the remote controller 50.

At this time, the first and second outdoor units 11 and 12 transmit the power data to the remote controller 50 since the first and second outdoor units 11 and 12 store the power data (S211 and S212). Since the third and fourth outdoor units 13 and 14 store no power data, the third and fourth outdoor units 13 and 14 may not transmit a response signal to the remote controller 50 or may transmit a notification signal indicating that the third and fourth outdoor units 13 and 14 store no power data to the remote controller 50 (S213 and S214).

The remote controller 50 stores the received power data (S220), analyzes the stored power data, and outputs the analysis result of the power data through the output unit 250 (S230).

After the remote controller 50 is connected to the first to fourth outdoor units 11 to 14, the first to fourth outdoor units 11 to 14 calculate power consumption quantities of the first to fourth outdoor units 11 to 14 and transmit the calculated power consumption quantities of the first to fourth outdoor units 11 to 14 to the remote controller 50. The remote controller 50 calculates the power consumption quantities of the first to fourth outdoor units 11 to 14 based on information received by the remote controller 50. Upon receiving the power data of the first to fourth outdoor units 11 to 14, the remote controller 50 stores the received power data of the first to fourth outdoor units 11 to 14.

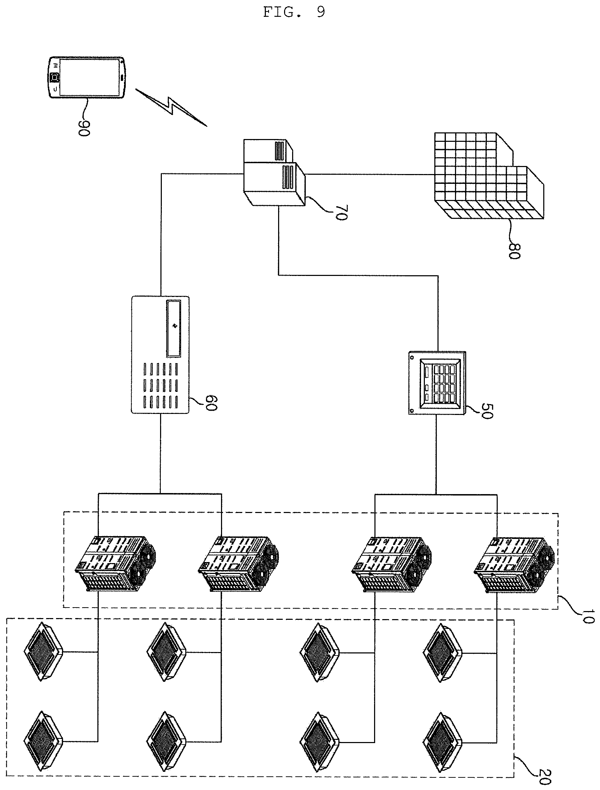

FIG. 9 is a view showing the construction of an air conditioner system according the present invention.

Referring to FIG. 9, the outdoor units 10 and the indoor units 20 may be connected to a power indicator 60 or a data server 70 in addition to the remote controller 50. The data server 70 may be cooperatively connected to a server 80 of an electric power company to apply power rates based on power consumption quantity information. A terminal 90 may access the data server 70 to receive information regarding power consumption of the air conditioner.

At this time, the data server 70 may be connected to a plurality of indoor and outdoor unit groups as well as one indoor and outdoor unit group. In addition, the data server 70 may store data regarding the indoor and outdoor unit groups.

The data server 70 may calculate statistical data per day, week, month, and year based on power data regarding the air conditioner which are accumulatively stored to generate a report of the power consumption quantities. In addition, the data server 70 may generate estimated data regarding future power consumption based on the accumulatively stored power data.

The report of the power consumption quantities or the estimated data regarding future power consumption may be used when each air conditioner sets a target value based on power consumption. For example, in a case in which the air conditioner performs power peak control or demand control, the air conditioner may set a target value or a reference value based on data of the data server 70.

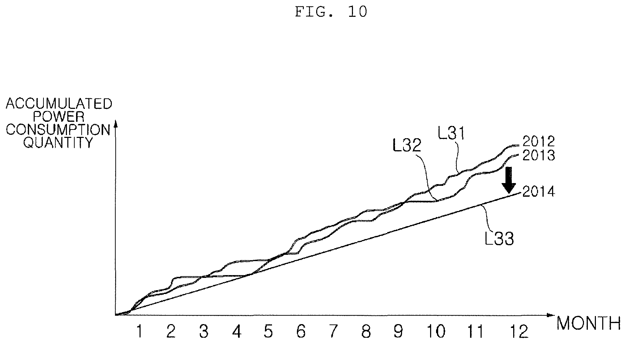

FIG. 10 is a graph showing statistical data of an air conditioner unit according the present invention. As shown in FIG. 10, the remote controller 50 may analyze power data received from an outdoor unit 10 and display information regarding accumulated power consumption quantity per period.

In addition to the remote controller 50, the data server 70 may calculate estimated power consumption quantity of the future, e.g. the year of 2014, based on the information regarding the accumulated power consumption quantity per period.

The power consumption quantity accumulated per year and month is displayed as a graph and estimate data are generated based on the change of energy consumption.

For example, in a case in which the accumulated power consumption quantities in the years of 2012 and 2013 are compared to set a target based on power consumption, a criterion, based on which 20 % reduction of the power consumption quantity is achieved in the year of 2014, may be set as show in FIG. 10.

In addition, the electric power company may increase or decrease electric power production in considering of change of the power consumption quantity per season and set power rates accordingly.

According to the present invention, therefore, the power data may be accumulatively stored in the outdoor units through data communication between the air conditioner units and the stored power data may be kept for a predetermined period or more even in a case in which an additional power data storage apparatus is not provided. The accumulatively stored power data may be transmitted to a device, such as a remote controller, a power indicator, or a control terminal, which will be connected to the outdoor units such that the device can use data regarding power consumption of the air conditioner.

Consequently, it is possible to check a target value based on the power consumption of the air conditioner or a power consumption pattern of the air conditioner and to study energy consumption measures based thereon.

Although all components constituting the embodiment of the present invention have been described as being combined into one component or being combined into one component and being operated as one component, the present invention is not limited thereto. According to embodiments, all components constituting each of the embodiments may be selectively coupled into one or more components and be operated as one or more components.

Although each of the components may be realized as independent hardware, some or all of the components may be selectively combined as a computer program having a program module executing some or all functions combined from one or several pieces of hardware.

As is apparent from the above description, in an air conditioner according to the present invention and an operation method of the same, a plurality of air conditioner units may store data of the air conditioner units through transmission and reception of data between the air conditioner units and at least one of the air conditioner units may transmit the stored data to the other air conditioner units according to requests of the other air conditioner units to calculate statistical data based on operation of the air conditioner in a state in which a controller, such as a remote controller, is not connected to the air conditioner units, thereby easily utilizing past data of the air conditioner.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An air conditioner comprising a plurality of outdoor units (10) and a plurality of indoor unit (20), each connected to at least one of the plurality of outdoor units (10), the air conditioner **characterized by** said plurality of outdoor units (10) each comprising a respective data unit (120);
wherein the air conditioner is configured to set one of the plurality of outdoor units as a storage unit,
wherein the plurality of outdoor units (10) are configured to calculate power consumption quantities thereof at predetermined time intervals, and to transmit the calculated power consumption quantities to said storage unit, and
wherein the plurality of outdoor units are configured, when being set as the storage unit, to accumulatively store the power consumption quantity data received from the other outdoor units in the respective data unit (120).

2. The air conditioner according to claim 1, wherein the air conditioner is configured, in case the size of the power consumption quantity data stored in the present storage unit reaches storage capacity of the storage unit, to set, as the next storage unit, one of the other outdoor units (10) excluding the outdoor unit (10) previously set as the storage unit.

3. The air conditioner according to claim 2, wherein the plurality of outdoor units (10) are configured, if the next storage unit is set, to transmit calculated power consumption quantity data to said next storage unit.

4. The air conditioner according to any of preceding claims , wherein the air conditioner is configured, in case all of the plurality of outdoor units (10) cannot store power consumption quantity data any more, to delete the previously stored power consumption quantity data according to the order stored and then to store new power consumption quantity data.

5. The air conditioner according to any of preceding claims, wherein each of the plurality of outdoor units (10) is configured, in case the size of the power consumption quantity data accumulatively stored therein exceeds a predetermined size, to generate a notification signal indicating that storage capacity thereof is insufficient and to transmit the notification signal to the other outdoor units (10).

6. The air conditioner according to claim 5,
wherein the air conditioner is configured, after transmission of the notification signal, to set one of the other outdoor units (10) as a new storage unit, and
wherein the plurality of outdoor units (10) are configured, if set as said new storage unit, to transmit a notification signal indicating that it is selected as said new storage unit to the other outdoor units (10).

7. The air conditioner according to claim 6, wherein the plurality of outdoor units (10) are configured, upon receipt of the notification signal indicating setting of said new storage unit, to transmit the power consumption quantity data thereof to said new storage unit.

8. The air conditioner according to any of preceding claims, further comprising control means (110) associated with the plurality of outdoor units (10),
wherein the plurality of outdoor units (10) are configured, if data connection is established with the control means (110), to transmit the power consumption quantity data stored therein to the control means (110), and to periodically transmit newly calculated power consumption quantity data thereof to the control means (110) .

9. The air conditioner according to claim 8, wherein the control means (110) is configured: to store the power consumption quantity data transmitted from the plurality of outdoor units (10); to analyze the power consumption quantity data to calculate statistical data regarding power consumption of the plurality of outdoor units (10) and the plurality of indoor units (20); and to display the calculated statistical data.

10. The air conditioner according to claim 8 or 9, wherein the control means (110) comprises any one selected from among a remote controller for central control, a general remote controller, a power indicator, and a demand controller.

11. An operation method of an air conditioner including a plurality of outdoor units (10) each comprising a respective data unit (120), the method **characterized by**
setting a first outdoor unit (10) selected from among the plurality of outdoor units (10) as a storage unit;
the plurality of outdoor units (10) calculating respective power consumption quantities;
the plurality of outdoor units (10) transmitting the calculated power consumption quantity data to the first outdoor unit (10) set as the storage unit; and
the first outdoor unit (10) accumulatively storing the received power consumption quantity data in the respective data unit (120).

12. The operation method according to claim 11, further comprising:
setting a second outdoor unit (10) selected from among the plurality of outdoor units (10) as a new storage unit in case a size of the power consumption quantity data stored in the first outdoor unit (10) reaches storage capacity of the first outdoor unit (10); and
having the plurality of outdoor units (10) transmit newly calculated power consumption quantity data thereof to the second outdoor unit (10).

13. The operation method according to claim 12, further comprising, in case all of the plurality of outdoor units (10) cannot store power consumption quantity data any more, deleting the previously stored power consumption quantity data according to the order stored and storing new power consumption quantity data.

14. The operation method according to any of claims 11 to 13, further comprising:
establishing data connection with control means (110) associated with the plurality of outdoor units (10); and
transmitting the power consumption quantity data stored in the plurality of outdoor units (10) to the control means(110).

15. The operation method according to claim 14, further comprising the control means (110) analyzing the received power consumption quantity data to calculate statistical data regarding power consumption of the plurality of outdoor units (10) and/or an indoor unit (20) connected thereto, and outputting the calculated statistical data.

## Patentansprüche

1. Klimaanlage mit mehreren Außeneinheiten (10) und mehreren Inneneinheiten (20), die jeweils mit mindestens einer der mehreren Außeneinheiten (10) verbunden sind, wobei die Klimaanlage **dadurch gekennzeichnet ist, dass**
die mehreren Außeneinheiten (10) jeweils eine Dateneinheit (120) aufweisen,
wobei die Klimaanlage dafür konfiguriert ist, eine der mehreren Außeneinheiten als eine Speichereinheit festzulegen,
wobei die mehreren Außeneinheiten (10) dafür konfiguriert sind, Leistungsverbrauchsmengen davon in vorgegebenen Intervallen zu berechnen und die berechneten Leistungsverbrauchsmengen an die Speichereinheit zu übertragen, und
wobei die mehreren Außeneinheiten dafür konfiguriert sind, wenn sie als die Speichereinheit festgelegt sind, die von den anderen Außeneinheiten empfangenen Leistungsverbrauchsmengendaten in der jeweiligen Dateneinheit (120) kumulativ zu speichern.

2. Klimaanlage nach Anspruch 1, wobei die Klimaanlage dafür konfiguriert ist, in dem Fall, dass die Größe der in der aktuellen Speichereinheit gespeicherten Leistungsverbrauchsmengendaten die Speicherkapazität der Speichereinheit erreicht, eine der anderen Außeneinheiten (10) mit Ausnahme der zuvor als Speichereinheit festgelegten Außeneinheit (10) als die nächste Speichereinheit festzulegen.

3. Klimaanlage nach Anspruch 2, wobei die mehreren Außeneinheiten (10) dafür konfiguriert sind, berechnete Leistungsverbrauchsmengendaten an die nächste Speichereinheit zu übertragen, wenn die nächste Speichereinheit festgelegt ist.

4. Klimaanlage nach einem der vorangehenden Ansprüche, wobei die Klimaanlage dafür konfiguriert ist, die zuvor gespeicherten Leistungsverbrauchsmengendaten gemäß der Speicherreihenfolge zu löschen und dann neue Leistungsverbrauchsmengendaten zu speichern, falls alle der mehreren Außeneinheiten (10) keine Leistungsverbrauchsmengendaten mehr speichern können.

5. Klimaanlage nach einem der vorangehenden Ansprüche, wobei jede der mehreren Außeneinheiten (10) dafür konfiguriert ist, für den Fall, dass die Größe der darin kumulativ gespeicherten Leistungsverbrauchsmengendaten eine vorgegebene Größe überschreitet, ein Benachrichtigungssignal zu erzeugen, das anzeigt, dass die Speicherkapazität davon unzureichend ist, und das Benachrichtigungssignal an die anderen Außeneinheiten (10) zu übertragen.

6. Klimaanlage nach Anspruch 5,
wobei die Klimaanlage dafür konfiguriert ist, nach dem Übertragen des Benachrichtigungssignals eine der anderen Außeneinheiten (10) als eine neue Speichereinheit festzulegen, und
wobei die mehreren Außeneinheiten (10) dafür konfiguriert sind, wenn sie als die neue Speichereinheit festgelegt sind, ein Benachrichtigungssignal, das anzeigt, dass sie als die neue Speichereinheit ausgewählt sind, an die anderen Außengeräte (10) zu übertragen.

7. Klimaanlage nach Anspruch 6, wobei die mehreren Außeneinheiten (10) dafür konfiguriert sind, nach Empfang des Benachrichtigungssignals, das die Festlegung der neuen Speichereinheit anzeigt, deren Leistungsverbrauchsmengendaten an die neue Speichereinheit zu übertragen.

8. Klimaanlage nach einem der vorangehenden Ansprüche, ferner mit einer den mehreren Außeneinheiten (10) zugeordneten Steuereinrichtung (110),
wobei die mehreren Außeneinheiten (10) dafür konfiguriert sind, wenn eine Datenverbindung mit der Steuereinrichtung (110) hergestellt ist, die darin gespeicherten Leistungsverbrauchsmengendaten an die Steuereinrichtung (110) zu übertragen und neu berechnete Leistungsverbrauchsmengendaten davon periodisch an die Steuereinrichtung (110) zu übertragen.

9. Klimaanlage nach Anspruch 8, wobei die Steuereinrichtung (110) dafür konfiguriert ist, die von den mehreren Außeneinheiten (10) übertragenen Leistungsverbrauchsmengendaten zu speichern; die Leistungsverbrauchsmengendaten zu analysieren, um statistische Daten bezüglich des Leistungsverbrauchs der mehreren Außeneinheiten (10) und der mehreren Inneneinheiten (20) zu berechnen; und die berechneten statistischen Daten anzuzeigen.

10. Klimaanlage nach Anspruch 8 oder 9, wobei die Steuereinrichtung (110) eine Komponente aufweist, die ausgewählt ist aus einer Fernbedienung für eine Zentralsteuerung, einer universellen Fernbedienung, einer Leistungsanzeige und einer Bedarfssteuereinheit.

11. Verfahren zum Betreiben einer Klimaanlage mit mehreren Außeneinheiten (10), die jeweils eine entsprechende Dateneinheit (120) aufweisen, wobei das Verfahren **dadurch gekennzeichnet ist, dass**:
eine aus den mehreren Außeneinheiten (10) ausgewählte erste Außeneinheit (10) als eine Speichereinheit festgelegt wird;
die mehreren Außeneinheiten (10) entsprechende Leistungsverbrauchsmengen berechnen;
die mehreren Außeneinheiten (10) die berechneten Leistungsverbrauchsmengendaten an die als die Speichereinheit festgelegte erste Außeneinheit (10) übertragen; und
die erste Außeneinheit (10) die empfangenen Leistungsverbrauchsmengendaten in der jeweiligen Dateneinheit (120) kumulativ speichert.

12. Verfahren nach Anspruch 11, ferner mit den Schritten:
Festlegen einer aus den mehreren Außeneinheiten (10) ausgewählten zweiten Außeneinheit (10) als eine neue Speichereinheit, falls eine Größe der in der ersten Außeneinheit (10) gespeicherten Leistungsverbrauchsmengendaten eine Speicherkapazität der ersten Außeneinheit (10) erreicht; und
Veranlassen, dass die mehreren Außeneinheiten (10) neu berechnete Leistungsverbrauchsmengendaten davon an die zweite Außeneinheit (10) übertragen.

13. Verfahren nach Anspruch 12, wobei ferner für den Fall, dass alle der mehreren Außeneinheiten (10) keine Leistungsverbrauchsmengendaten mehr speichern können, die zuvor gespeicherten Leistungsverbrauchsmengendaten gemäß der Speicherreihenfolge gelöscht und neue Leistungsverbrauchsmengendaten gespeichert werden.

14. Verfahren nach einem der Ansprüche 11 bis 13, ferner mit den Schritten:
Herstellen einer Datenverbindung mit einer Steuereinrichtung (110), die den mehreren Außeneinheiten (10) zugeordnet ist; und
Übertragen der in den mehreren Außeneinheiten (10) gespeicherten Leistungsverbrauchsmengendaten an die Steuereinrichtung (110).

15. Verfahren nach Anspruch 14, wobei die Steuereinrichtung (110) ferner die empfangenen Leistungsverbrauchsmengendaten analysiert, um statistische Daten bezüglich des Leistungsverbrauchs der mehreren Außeneinheiten (10) und/oder einer damit verbundenen Inneneinheit (20) zu berechnen und die berechneten statistischen Daten ausgibt.

## Revendications

1. Climatiseur, comprenant une pluralité d'unités en extérieur (10) et une pluralité d'unités en intérieur (20), chacune raccordée à au moins une de la pluralité d'unités en extérieur (10), le climatiseur étant **caractérisé par** ladite pluralité d'unités en extérieur (10) comprenant chacune une unité de données respective (120) ;
dans lequel le climatiseur est configuré pour régler une de la pluralité d'unités en extérieur en tant qu'unité de stockage,
dans lequel la pluralité d'unités en extérieur (10) sont configurées pour calculer des quantités de consommation d'énergie de celles-ci à des intervalles de temps prédéterminés, et pour transmettre les quantités de consommation d'énergie calculées à ladite unité de stockage, et
dans lequel la pluralité d'unités en extérieur sont configurées, lorsqu'elles sont réglées en tant qu'unité de stockage, pour stocker de façon cumulative les données de quantités de consommation d'énergie reçues des autres unités en extérieur dans l'unité de données respective (120).

2. Climatiseur selon la revendication 1, dans lequel le climatiseur est configuré, au cas où la taille des données de quantités de consommation d'énergie stockées dans la présente unité de stockage atteint la capacité de stockage de l'unité de stockage, pour régler, en tant qu'unité de stockage suivante, une des autres unités en extérieur (10) à l'exclusion de l'unité en extérieur (10) auparavant réglée en tant qu'unité de stockage.

3. Climatiseur selon la revendication 2, dans lequel la pluralité d'unités en extérieur (10) sont configurées, si l'unité de stockage suivante est réglée, pour transmettre des données de quantités de consommation d'énergie calculées à ladite unité de stockage suivante.

4. Climatiseur selon l'une quelconque des revendications précédentes, dans lequel le climatiseur est configuré, au cas où la totalité de la pluralité d'unités en extérieur (10) ne peuvent plus stocker de données de quantités de consommation d'énergie, pour supprimer les données de quantités de consommation d'énergie stockées auparavant, selon l'ordre dans lequel elles ont été stockées, et puis pour stocker de nouvelles données de quantités de consommation d'énergie.

5. Climatiseur selon l'une quelconque des revendications précédentes, dans lequel chacune de la pluralité d'unités en extérieur (10) est configurée, au cas où la taille des données de quantités de consommation d'énergie stockées de façon cumulative dans celle-ci dépasse une taille prédéterminée, pour générer un signal de notification indiquant que la capacité de stockage de celle-ci est insuffisante et pour transmettre le signal de notification aux autres unités en extérieur (10).

6. Climatiseur selon la revendication 5,
dans lequel le climatiseur est configuré, après la transmission du signal de notification, pour régler une des autres unités en extérieur (10) en tant que nouvelle unité de stockage, et
dans lequel la pluralité d'unités en extérieur (10) sont configurées, si elles sont réglées en tant que nouvelle unité de stockage, pour transmettre un signal de notification indiquant qu'elles sont sélectionnées en tant que dite nouvelle unité de stockage aux autres unités en extérieur (10).

7. Climatiseur selon la revendication 6, dans lequel la pluralité d'unités en extérieur (10) sont configurées, lors de la réception du signal de notification indiquant le réglage de ladite nouvelle unité de stockage, pour transmettre les données de quantités de consommation d'énergie de celles-ci à ladite nouvelle unité de stockage.

8. Climatiseur selon l'une quelconque des revendications précédentes, comprenant en outre des moyens de commande (110) associés à la pluralité d'unités en extérieur (10),
dans lequel la pluralité d'unités en extérieur (10) sont configurées, si une connexion de données est établie avec les moyens de commande (110), pour transmettre les données de quantités de consommation d'énergie stockées dans celles-ci aux moyens de commande (110), et pour transmettre périodiquement des données de quantités de consommation d'énergie nouvellement calculées de celles-ci aux moyens de commande (110).

9. Climatiseur selon la revendication 8, dans lequel les moyens de commande (110) sont configurés : pour stocker les données de quantités de consommation d'énergie transmises de la pluralité d'unités en extérieur (10) ; pour analyser les données de quantités de consommation d'énergie pour calculer des données statistiques concernant la consommation d'énergie de la pluralité d'unités en extérieur (10) et de la pluralité d'unités en intérieur (20) ; et pour afficher les données statistiques calculées.

10. Climatiseur selon la revendication 8 ou 9, dans lequel les moyens de commande (110) comprennent l'un quelconque sélectionné parmi un dispositif de commande à distance pour commande centrale, un dispositif général de commande à distance, un indicateur d'énergie, et un dispositif de commande de demande.

11. Procédé de fonctionnement d'un climatiseur incluant une pluralité d'unités en extérieur (10), chacune comprenant une unité de données respective (120), le procédé étant **caractérisé par**
le réglage d'une première unité en extérieur (10), sélectionnée parmi la pluralité d'unités en extérieur (10), en tant qu'unité de stockage ;
le calcul, par la pluralité d'unités en extérieur (10), de quantités de consommation d'énergie respectives ;
la transmission, par la pluralité d'unités en extérieur (10), des données de quantités de consommation d'énergie calculées à la première unité en extérieur (10) réglée en tant qu'unité de stockage ; et
le stockage de façon cumulative, par la première unité en extérieur (10), des données de quantités de consommation d'énergie reçues, dans l'unité de données respective (120).

12. Procédé de fonctionnement selon la revendication 11, comprenant en outre :
le réglage d'une seconde unité en extérieure (10), sélectionnée parmi la pluralité d'unités en extérieur (10), en tant que nouvelle unité de stockage, au cas où une taille des données de quantités de consommation d'énergie stockées dans la première unité en extérieur (10) atteint la capacité de stockage de la première unité en extérieur (10) ;
et
la commande de la transmission, par la pluralité d'unités en extérieur (10), de données de quantités de consommation d'énergie nouvellement calculées de celles-ci, à la seconde unité en extérieure (10).

13. Procédé de fonctionnement selon la revendication 12, comprenant en outre, au cas où la totalité de la pluralité d'unités en extérieur (10) ne peuvent plus stocker de données de quantités de consommation d'énergie, la suppression des données de quantités de consommation d'énergie stockées auparavant, selon l'ordre dans lequel elles sont stockées, et le stockage de nouvelles données de quantités de consommation d'énergie.

14. Procédé de fonctionnement selon l'une quelconque des revendications 11 à 13, comprenant en outre :
l'établissement d'une connexion de données avec des moyens de commande (110) associés à la pluralité d'unités en extérieur (10) ; et
la transmission des données de quantités de consommation d'énergie stockées dans la pluralité d'unités en extérieur (10) aux moyens de commande (110).

15. Procédé de fonctionnement selon la revendication 14, comprenant en outre l'analyse, par les moyens de commande (110), des données de quantités de consommation d'énergie reçues pour calculer des données statistiques concernant la consommation d'énergie de la pluralité d'unités en extérieur (10) et/ou d'une unité en intérieur (20) connectée à celles-ci, et la sortie des données statistiques calculées.
